# EUROPEAN PATENT SPECIFICATION

(11) **EP 4 202 221 B1**
(45) Date of publication and mention of the grant of the patent: **31.07.2024**
(21) Application number: 21383199.3
(22) Date of filing: 22.12.2021
(51) Int. Cl.: F16F 7/10

(54) **DAMPER FOR WIND TURBINES**
DÄMPFER FÜR WINDTURBINEN
AMORTISSEUR POUR ÉOLIENNES

(43) Date of publication of application: 28.06.2023
(73) Proprietor: Comercial Química Massó S.A., 08029 Barcelona (ES)
(72) Inventor: GARCÍA-FARIA COLL, Fernando, 08029 BARCELONA (ES); GELIDA JANÉ, Marta, 08029 BARCELONA (ES); TEJEL GORGAS, Rafael, 08029 BARCELONA (ES)
(74) Representative: Iglesias Monravá, José Mª

(56) References cited:
- EP-A1- 2 884 095
- EP-A1- 3 063 405
- EP-B1- 3 063 405
- JP-A- 2003 176 774
- US-A1- 2011 031 757

## Description

### TECHNICAL FIELD

The present invention is related to a damper system designed to balance the movements of a wind turbine. The present invention further relates to a wind turbine comprising the damper system and the use of a composition as a damper fluid for wind turbines.

### BACKGROUND ART

Skyscrapers and other tall constructions, and wind turbines in particular, are commonly provided with damper systems so as to reduce undesired movements, such as oscillation movements, that may arise for instance from the wind or earthquakes.

These damper systems can be located in the upper part of these constructions or located along their longitudinal section. Moreover, there exists in the art systems with a single repository containing a damping liquid or constructions having a large number of points containing damping liquids compensating unwanted movements that can compromise the stability, solidity and durability of buildings.

It is known in the art that the damping liquid must meet a series of technical features that favor or not its operability and greater effectiveness and efficiency: working range temperatures, density, viscosity, corrosiveness, stability, and toxicological profile are some of the aspects to be taken in consideration.

The damping liquid must ensure workability at high temperatures, such as +50 °C, for applications in the desert, or at temperatures below -10 °C, preferably below -18 °C.

A known solution in the art to maintain the temperature of the liquid at a convenient temperature is to provide the damper with a controlled temperature system.

Another solution known in the art is to add a cooling fluid, an antifreezing agent such as glycols, to the water, so that the freezing point is reduced, and the damping liquid can be used in the damper at low temperatures.

A less expensive liquid to be chosen for the oscillating mass is water comprising at least one agent for lowering the freezing temperature of the water and/or at least one agent for increasing the density of the liquid.

Other damper systems use mechanical devices having no water in them.

It is also known in the art that it is convenient to use a liquid with the highest possible density, since the mechanical energy depends on the mass of the liquid according to the Newton's second law and the mechanical force. Accordingly, the generated energy depends on the motion but also on the mass and the height where the repositories of these damping fluids are set. According to this principle, a high-density fluid is more capable to dissipate the mechanical energy of the wind and reduce power losses dramatically, by decreasing vibrations and avoiding damages to the tower walls.

In addition, a noncorrosive fluid is also more convenient in order to protect the tower in case of any failure with the damper system, or a non-hazardous fluid to protect the operators who install and maintain the towers, as well as to ensure safety against any contact of the damping liquids with water, in offshore solutions, or with land, in onshore solutions.

Patent application WO0077394A1 discloses a damping means for wind turbines comprising a plurality of box shaped containers having a square cross section and being partly filled with liquid to provide a unidirectional damping with a logarithmic decrement of oscillations of the first natural bending frequency of the wind turbine of at least 4-8%. Moreover, this patent application mentions that sodium chloride might be added to the water of the liquid in the damper. Other less corrosive alternatives mentioned in said application are sodium chloride are zinc chloride and ferrous sulphate.

Patent application WO2021094489A1 discloses wind turbine in which the damping of the movements is achieved by an aqueous liquid contained in a container of a damper in the turbine wherein the aqueous liquid comprises a water solution of citrate, specifically potassium and/or sodium citrate. Said application states that, in comparison to WO0077394A1, citrate salts are more environmentally friendly.

EP3063405 discloses a method for damping oscillations in towers of wind turbine, which involves suspending a bag containing a liquid from the tower such that said bag is configured to hit the tower wall of the wind turbine during oscillations.

Wind turbines planned to be installed from 2024 on will suppose a challenge to current dampers, since those turbines are planned to be higher than the ones currently available and, therefore, a high weight of the damper will be needed. With the current liquids higher amounts of liquid in the damper will be needed, since a lot of liquid will be needed to compensate the energy that higher towers will be submitted to. Therefore, it is convenient to obtain new liquids having high density.

### SUMMARY OF THE INVENTION

A first aspect of the present invention relates to a damper for balancing the movements of a wind turbine, wherein the balancing of the movements is achieved by an aqueous solution contained in a container of the damper, wherein the aqueous solution comprises a phosphate. A second aspect of the present invention is related to a wind turbine or a building comprising a damper as defined herein.

A third aspect of the present invention is related to a wind power station comprising at least one of the wind turbines defined herein.

### DETAILED DESCRIPTION OF THE INVENTION

The foregoing and other advantages and features will be more fully understood from the following detailed description, to be taken in an illustrative and not limitative way.

The damper according to the present invention is as defined herein, that is, the present invention is directed towards a damper for balancing the movements of a wind turbine, wherein the balancing of the movements is achieved by an aqueous solution contained in a container of the damper, the aqueous solution comprising a phosphate.

As described hereinabove, tall buildings, and in particular wind turbines, are submitted to oscillations and there is a need to balance (or cancel, or damp) those oscillations. Such effect is obtained by a damper, that in the present invention includes a container filled at least partially with an aqueous solution comprising a phosphate.

Preferably, the phosphate according to the present invention is an inorganic phosphate. More preferably, the inorganic phosphate is a sodium or a potassium salt.

The inorganic phosphate according to the present invention preferably has a molecular weight higher than 150 g/mol, preferably higher than 200 g/mol, more preferably higher than 300 g/mol.

Preferably, the inorganic phosphate according to the present invention is selected from the group consisting of sodium hexametaphosphate (Na₆P₆O₁₈, CAS 10124-56-8, EC 233-343-1), dipotassium hydrogen orthophosphate (K₂HPO₄, CAS 7758-11-4, EC 231-834-5), tripotassium orthophosphate (K₃PO₄, CAS 7778-53-2, EC 231-907-1), tetrapotassium pyrophosphate (K₄P₂O₇, CAS 7320-34-5, EC 230-785-7), pentapotassium triphosphate (K₅P₃O₁₀, CAS 13845-36-8, EC 237-574-9) and combinations thereof. Preferably, the inorganic phosphate is tetrapotassium pyrophosphate or a combination of tetrapotassium pyrophosphate, dipotassium hydrogenorthophosphate and pentapotassium triphosphate.

Preferably, the aqueous solution comprising an inorganic phosphate according to the present invention is selected from a combination of the five inorganic phosphates disclosed above wherein at least one of the inorganic phosphate has a molecular weight higher than 300 g/mol.

Preferably, the amount of the phosphate or the combination of phosphates according to the present invention is between 30% and 70% by weight with respect to the total weight of the aqueous solution, preferably between 40% and 70%, more preferably between 45% and 65%.

The damper according to the present invention may further comprise an anticorrosion agent, also known in the as corrosion inhibitor.

Preferably, the anticorrosion agent is selected from the group comprising azoles, organic acids, fatty acids and its derivatives, n-oleoylsarcosine and combinations thereof.

As the damper comprises a phosphate, the presence of an additional corrosion inhibitor can be suppressed or reduced most of the times as the phosphate itself acts as a buffer that increases alkalinity and prevents corrosion of molten Fe and other metals. This effect is specially good when the phosphate comprises at least tetrapotassium pyrophosphate.

In particular, azole anticorrosion agents are preferably selected from the group of aryltriazoles, arylalkyltriazoles like tolyltriazole (CAS 29385-43-1 EC 249-596-6), benzotriazole (CAS 95-14-7, EC 202-394-1) and combinations thereof.

Organic acids are preferably selected from isononanoic acid (CAS 26896-18-4, EC 248-092-3), hexanoic acid (CAS 142-62-1, EC 205-550-7), sebacic acid (CAS 111-20-6, EC 203-845-5) and combinations thereof.

Fatty acids and its derivatives according to the present invention are preferably selected from stearamide (CAS 124-26-5, EC 204-693-2), Erucamide ((Z)-docos-13-enamide, CAS 112-84-5, EC 204-009-2), palmitamide (CAS 629-54-9, EC 211-095-5), oleamide (CAS 301-02-0, EC 206-103-9) and combinations thereof. Together with n-oleoyl sarcosine (CAS: 110-25-8, CE: 203-749-3) they are a type of multimetal corrosion inhibitors specially dedicated to the protection of aluminum surfaces that might be used alone or with combinations thereof.

The anticorrosion agent or the combination of anticorrosion agents preferably amounts to between 0,1 % and 2,5% by weight with respect to the total weight of the aqueous solution.

In particular, the azole or the azole combination is preferably in an amount of between 0,01% and 0,5% by weight with respect to the total weight of the aqueous solution.

In particular, the fatty acid derivatives, n-oleoyl sarcosine or the organic acid combination is preferably in an amount of between 0,020% and 2% by weight with respect to the total weight of the aqueous solution.

In particular, the organic acid or the organic acid combination is preferably in an amount of between 0,20% and 2% by weight with respect to the total weight of the aqueous solution.

Optionally, a cosolvent like ethylene glycol (CAS 107-21-1, CE 203-473-3) or propylene glycol (CAS 57-55-6, CE 200-338-0) may be used in the aqueous solution according to the invention.

The present invention, and in particular the aqueous solution in the container of the damper, has several advantages over the prior art.

The invention proposed is based on phosphates, commonly used in the food and agriculture fields to ensure that the toxicological profile is safe or good to work with.

The aqueous solution according to the present invention achieves high densities, between 1.6 and 2 kg/L, thereby improving the efficiency of previously disclosed solutions, for instance a 20% improvement with respect to the solution disclosed in WO2021094489 A1. Therefore, less aqueous solution or fluid is needed and a cost reduction of 20 to 60% is obtained, not only because there is less liquid waste, but also because the amount of plastic, steel and cable maintenance is required.

Although damping systems using aqueous solutions are not the only solution available, it is to be noted that taller wind towers planned to be installed as of 2024 will not accept the fluids known in the prior art, because a larger amount of fluid will be required to compensate/balance the energy received in the much taller towers. Therefore, the present invention solves this problem by obtaining a high-density liquid, thereby allowing progress in the development of this form of renewable energy generation.

In addition to increasing density and therefore efficiency, the damper of the present invention ensures a range of working temperatures between +54 and -60°C without the need to use glycols or other substances that reduce the freezing temperature of the aqueous solution.

Furthermore, the aqueous solution in the damper according to the present invention shows a suitable viscosity that is essential for this type of dampers that use liquid products. Having the right viscosity allows the damping solution to move within the damper trays with the same frequency and wavelength of the waves that are generated in the vibration movement of the towers or buildings by the force of the wind on the structure. The movement of the damping solution ideally generates a force of similar intensity but in the opposite direction that compensates or dampens the force of the wind, relaxing or ideally canceling the mechanical energy that the structure has to support.

Moreover, the present invention discloses an aqueous solution in a damper that work simultaneously as a corrosion inhibitor for different metals, whereas previous solutions involved the use of functional additives.

In addition, the aqueous solution according to the present invention inhibits bacterial growth by acting as a bactericide or fungicide for a product that carries water and ensures a long lifetime.

Therefore, this invention protects the mixture from microbial attack and prevents its oxidation and deterioration over time.

Also, the aqueous solution according to the present invention has a light toxicological profile that allows its handling with minimum standards of personal protection and allows working with it on off-shore and on-shore platforms.

The aqueous solution as described herein may preferably be based on the dissolution of solutes with different ions, enabling an increase concentration and density.

The present invention also discloses a wind turbine or a building comprising a damper as disclosed herein. Preferably, the damper is located in the tower or the nacelle of the wind turbine.

A further aspect of the present invention is related to a wind power station comprising at least one of the wind turbines as defined herein.

### EXAMPLES

The following examples illustrate various aqueous solutions according to the invention.

### Example 1: Aqueous solutions

### Sample 1

| **Components** | **Amount (% by weight)** |
|---|---|
| Tetrapotassium pyrophosphate | 38,80 |
| Dipotassium hydrogenorthophosphate | 10,30 |
| Pentapotassium triphosphate | 15,35 |
| Corrosion inhibition package (Tolyltriazole (2%), isononanoic acid (20%), n-oleoyl sarcosine (2%), Monopropilenglycol, | 0,35 |

| Alkaline Water) | |
|---|---|
| Water | 35,2 |

Tetrapotassium pyrophosphate was added to deionized water at the proportion above and dissolved. Dipotassium hydrogenorghophosphate was then added at the proportion above and dissolved. Pentapotassium triphosphate was then added at the proportion above and dissolved. The aqueous solution was mixed at 20°C by stirring until a homogenous mixture was obtained.

Density of the aqueous solution was measured using a PROTON densimeter at a temperature of 20°C yielding a density of 1,72 kg/L at 20°C.

### Sample 2

| **Components** | **Amount (% by weight)** |
|---|---|
| Tetrapotassium pyrophosphate | 56,7 |
| Water | 43,3 |

Tetrapotassium pyrophosphate was added to deionized water at the proportion above. The aqueous solution was mixed at 20°C by stirring until a homogenous mixture was obtained.

Density of the aqueous solution was measured using a PROTON densimeter at a temperature of 20°C yielding a density of 1,680 kg/L at 20°C.

### Sample 3

| **Components** | **Amount (% by weight)** |
|---|---|
| Sodium hexametaphosphate | 52,6 |
| Water | 47,4 |

Sodium hexametaphosphate was added to deionized water at the proportion above. The aqueous solution was mixed at 20°C by stirring until a homogenous mixture was obtained.

Density of the aqueous solution was measured using a PROTON densimeter at a temperature of 20°C yielding a density of 1,601 kg/L.

### Sample 4

| **Components** | **Amount (% by weight)** |
|---|---|
| Tetrapotassium pyrophosphate | 64,8 |
| Water | 35,2 |

Tetrapotassium pyrophosphate was added to deionized water at the proportion above. The aqueous solution was mixed at 20°C by stirring until a homogenous mixture was obtained.

Density of the aqueous solution was measured using a PROTON densimeter at a temperature of 25°C yielding a density of 1,815 kg/L.

### Example 2: Physicochemical stability

The stability of two of the above examples (Sample 2 and Sample 4) was tested at room temperature at -14°C, 4°C, 40°C and 54°C.

The appearance of the samples were checked after two weeks. After a month, the samples were tested to verify their stability. In addition to density studies, pH and IR spectrum were performed.

### Sample 2

**Table 1. Stability studies for Sample 2**

| | | room temperature | -14°C | 40 °C | 4°C | 54°C |
|---|---|---|---|---|---|---|
| Day 0 | Aspect | Clear colourless liquid | | | | |
| | Density 25°C (g/mL) | 1,681 | | | | |
| | pH | 11,64 | | | | |
| | Dynamic Viscosity (mPa·s) Brookfield 25°C | 30 | | | | |
| | Kinematic Viscosity (mm²/s) 25°C | 17,8 | | | | |
| Week 2 | Aspect | Clear colourless liquid | Clear colourless liquid | Clear colourless liquid | Clear colourless liquid | Clear colourless liquid |
| Week 4 | Aspect | Clear colourless liquid | Clear colourless liquid | Clear colourless liquid | Clear colourless liquid | Clear colourless liquid |
| | Density 25°C (g/mL) | 1,680 | 1,680 | 1,680 | 1,680 | 1,680 |
| | pH 25°C | 11,84 | 11,81 | 11,83 | 11,84 | 11,83 |
| | Dynamic Viscosity (mPa·s) Brookfield 25°C | 28 | 28 | 28 | 29 | 28 |
| | Kinematic Viscosity (mm²/s) 25°C | 16,6 | 16,6 | 16,6 | 17,3 | 16,6 |
| | IR Spectrum | Ok | Ok | Ok | Ok | Ok |

### Example 1.4

**Table 2. Stability studies for Sample 4**

| | | room temperature | -14°C | 40 °C | 4°C | 54°C |
|---|---|---|---|---|---|---|
| Day 0 | Aspect | Clear colourless liquid | | | | |
| | Density 25°C (g/mL) | 1,815 | | | | |
| | pH | 11,86 | | | | |
| | Dynamic Viscosity (mPa·s) Brookfield 25°C | 95,0 | | | | |
| | Kinematic Viscosity (mm²/s) 25°C | 52,3 | | | | |
| Week 1 | Aspect | Clear colourless liquid | Clear colourless liquid | Clear colourless liquid | Clear colourless liquid | Clear colourless liquid |
| Week 2 | Aspect | Clear colourless liquid | Clear colourless liquid | Clear colourless liquid | Clear colourless liquid | Clear colourless liquid |
| Week 3 | Aspect | Clear colourless liquid | Clear colourless liquid | Clear colourless liquid | Clear colourless liquid | Clear colourless liquid |
| Week 4 | Aspect | Clear colourless liquid | Clear colourless liquid | Clear colourless liquid | Clear colourless liquid | Clear colourless liquid |
| | Density 25°C (g/mL) | 1,815 | 1,814 | 1,814 | 1,815 | 1,815 |
| | pH 25°C | 11,62 | 11,77 | 11,77 | 11,69 | 11,60 |
| | Dynamic Viscosity (mPa·s) Brookfield 25°C | 95,0 | 95,0 | 93,2 | 95,4 | 93,0 |
| | Kinematic Viscosity (mm²/s) 25°C | 52,3 | 52,3 | 51,4 | 52,6 | 51,2 |
| | IR Spectrum | Ok | Ok | Ok | Ok | Ok |

As shown in tables 1 and 2, no significant variation was observed in the four samples for each of the two examples. In particular, no significant variation was observed in pH value at any of the studied temperature for the two examples; no significant variation was observed with regards to density.

An IR spectrum was carried out for each sample after a month's storage at different temperatures. The correlation between them is over 98%, therefore is no degradation of the product.

### Example 3: Microbiological stability

### Sample 2

A water activity test was carried out using an AQUALAB 4TEV dew point hygrometer to assess the risk of microbiological growth in Sample 2. The water activity result was 0.664, resulting in a low-risk product.

Water activity (aw) is a measurement of the energy status of the water in a system. It indicates how tightly water is "bound," structurally or chemically, within a substance. The lower a sample's water activity, the more tightly bound that water is within the sample. Water activity is the relative humidity of air in equilibrium with a sample in a sealed measurement chamber, or, in other words, it is the partial vapor pressure of water in a substance (P) divided by the standard state partial vapor pressure of water (PC). P0 (the saturation vapor pressure) depends only on the temperature of the sample so it's possible to measure P0 by measuring the temperature of the sample. P (the vapor pressure of the water in the sample) can be measured by measuring the vapor pressure of water in the sealed head space above the sample. The most accurate way of measuring that vapor pressure is to measure the dew point of the air.

The concept of water activity is of particular importance in determining product quality and safety. Microorganisms will not grow below a certain water activity level-aw of 0.90 for most pathogenic bacteria, 0.70 for spoilage moulds, and 0.60 for all microorganisms.

Readings were reliable, providing ±0.003 aw accuracy and a range from 0.030 to 1.000aw. The resolution is 0.0001aw.

### Sample 4

A challenge test was carried out for Sample 4.

An inoculum was prepared in 10 mL of TSB for several bacteria separately and in 10 mL of SBD for yeast and fungi. They are incubated for 2 days at 36°C and 25°C respectively. The strains contained in the inoculum used are: Gram- *E. coli* (CECT 516), Gram+ *M. Luteos* (CECT 245) and S. *Xylosus* (CECT 237), Yeast C. *Tropic* (CECT 1005) and Fungi *A. Niger* (CECT 2807).

The inoculum was prepared following the following procedure described in the cosmetic standards: 1 colony of each of the bacteria separately is dispersed in 10 mL of TSB and that of yeast and fungi in 10 mL of SDB. They are incubated for 2 days at 36°C and 25°C respectively.

After that, 10 mL of a 0.05% solution of Tween 80 in deionized water was added to the Aspergillius plate, glass microbeads were added and the fungal spores were dispersed.

The dispersion was collected and mixed with the remaining prepared inoculum mixture of bacteria and yeast in a sterile flask. The inoculum was seeded on TSA and SDA+chloramphenicol plates at a dilution of 1e-04. Three consecutive inoculations of the samples were planned at a sample/inoculum ratio of 100/1 (inoculated level of mesophilic flower CFU/mL=e+06 and inoculated level of fungi/yeast CFU/mL=e+05-e+06).

After incubation at 25°C, the samples are seeded on TSA and SDA+chloramphenicol plates.

The results (counts of bacteria/fungi/yeasts) are summarized in the following tables:

**Table 3. Bacteria in inoculum and Sample 4**

| | 1^{st} inoculation | 2^{nd} inoculation | 3^{rd} inoculation |
|---|---|---|---|
| Inoculum | 9,36·10⁵ | 1,27·10⁶ | 2,34·10⁶ |
| Sample 4 | <2·10² | <2·10² | <2·10² |

**Table 4. Fungi and yeast in inoculum and Sample 4.**

| | 1^{st} inoculation | 2^{nd} inoculation | 3^{rd} inoculation |
|---|---|---|---|
| Inoculum | 3,68·10⁵ | 4,68·10⁵ | 1,04·10⁵ |
| Sample 4 | <2·10² | <2·10² | <2·10² |

Antimicrobial efficacy is considered acceptable when the results are shown between the following criterion: Bacteria require 3log reduction at the end of the 3 inoculation cycles, fungi and yeasts require 1log reduction at the end of the 3 inoculation cycles, as required by UNE-ISO 11930:2012.

There was no growth (X <10³) of bacteria and fungi in Sample 4.

Therefore, it is concluded that both Sample 2 and Sample 4 have a very low risk of microbiological contamination.

### Example 4: Corrosion stability

### Sample 4

A corrosion test was carried out in accordance with International Standards ASTM D1384 designed for cooling systems in motor engines. Former damping fluids in wind towers used to be cooling fluids previously designed for motor engines and thus used to include this test as a side report. As there is no specific corrosion test for damping fluids, the ASTM D3306 test is used as a reference to measure the potential corrosivity of the blend in front of different metals.

Cooling Systems work with motor engines at 250-300°C, have acidity generation, cooling starts or the contamination with undesirable substances. The ASTM D1384 is a standard test that works with 33% concentration of glycols and saturated chlorinated corrosive salts to see how a cooling liquid protects in front of a potential corrosion attack in these stressed conditions.

The ASTM D1385 test is unspecific for our purpose in which there is no glycols, or its proportions are negligible (<5%), there is no corrosive salts, and the working conditions are far from being stressing in comparison with a motor engine. However, having interesting results in front of steel or copper with this standard can be considered as an insurance to avoid corrosion a potential corrosion in the towers in the case of suffering a failure or leakage.

The results are summarized in the following table:

**Table 5. Corrosion test for Sample 4**

| **Property** | **Method** | **Result** | **Units** |
|---|---|---|---|
| **Pour point** | ASTM D9590 | -60 | °C |

| **Corrosion (glass container)** | | | |
|---|---|---|---|
| Copper | ASTM D1384 | 0,9 | mg/g of sample |
| Solder | | 32 | |
| Brass | | 2 | |
| Steel | | 33 | |
| Cast iron | | 26 | |
| Aluminium | | 2688 | |

The results of this test for Aluminum were high (2688 ppm) but they were considered not relevant for wind Turbines where the presence of aluminum is negligible. In case of needing an extra protection for aluminum, the use of fatty acids and its derivatives or n-oleoyl sarcosine would protect this metal as disclosed above.

The conclusion is that there is no need for an additional corrosion inhibitor.

The pour point of Sample 4 is determined to be -60°C using the ASTM D5959 method. Therefore, it can be said that the product is workable between -50°C (10 degrees higher than the pour point) to at least +54°C (as shown in Example 2).

## Claims

1. A damper for balancing the movements of a wind turbine, wherein the balancing of the movements is achieved by an aqueous solution contained in a container of the damper, **characterized in that** the aqueous solution comprises a phosphate.

2. The damper according to claim 1, wherein the phosphate is an inorganic phosphate.

3. The damper according to claim 2, wherein the inorganic phosphate is a sodium or a potassium salt.

4. The damper according to claim 2 or 3, wherein the inorganic phosphate has a molecular weight higher than 150 g/mol, preferably higher than 300 g/mol.

5. The damper according to any one of claims 2 to 4, wherein the inorganic phosphates are selected from the group consisting of sodium hexametaphosphate, dipotassium hydrogen orthophosphate, tripotassium orthophosphate, tetrapotassium pyrophosphate, pentapotassium triphosphate and combinations thereof.

6. The damper according to claim 5, wherein the inorganic phosphate is tetrapotassium pyrophosphate.

7. The damper according to any one of the previous claims, wherein the phosphate is in an amount of between 45 % and 65 % by weight with respect to the total weight of the aqueous solution.

8. The damper according to any one of the previous claims, wherein the aqueous solution further comprises an anticorrosion agent.

9. The damper according to claim 8, wherein the anticorrosion agent is selected from the group comprising azoles, organic acids, fatty acids, n-oleoylsarcosine and combinations thereof.

10. The damper according to claim 9, wherein the azoles are selected from the group of tolyltriazole and benzotriazole and the organic acids are selected from the group of isononanoic acid, hexanoic acid, sebacic acid and combinations thereof.

11. The damper according to any one of claims 8 to 10, wherein the anticorrosion agent is in an amount of between 0,1 % and 2,5% by weight with respect to the total weight of the aqueous solution.

12. A wind turbine or a building comprising a damper according to anyone of the preceding claims.

13. The wind turbine according to claim 12, wherein the damper is located in the tower or the nacelle of the wind turbine.

14. A wind power station comprising at least one of the wind turbines according to claims 12 or 13.

## Patentansprüche

1. Dämpfer zum Auswuchten der Bewegungen einer Windturbine, wobei das Auswuchten der Bewegungen mittels einer wässrigen Lösung, welche in einem Behälter des Dämpfers enthalten ist, erreicht wird, **dadurch gekennzeichnet, dass** die wässrige Lösung ein Phosphat umfasst.

2. Dämpfer nach Anspruch 1, wobei das Phosphat ein anorganisches Phosphat ist.

3. Dämpfer nach Anspruch 2, wobei das anorganische Phosphat ein Natrium- oder ein Kaliumsalz ist.

4. Dämpfer nach Anspruch 2 oder 3, wobei das anorganische Phosphat ein Molekulargewicht höher als 150 g/mol, vorzugsweise höher als 300 g/mol, aufweist.

5. Dämpfer nach einem der Ansprüche 2 bis 4, wobei die anorganischen Phosphate aus der Gruppe bestehend aus Natriumhexametaphosphat, Dikalium-Wasserstoff-Orthophosphat, Trikaliumorthophosphat, Tetrakaliumpyrophosphat, Pentakaliumtriphosphat und Kombinationen derselben ausgewählt werden.

6. Dämpfer nach Anspruch 5, wobei das anorganische Phosphat Tetrakaliumpyrophosphat ist.

7. Dämpfer nach einem der vorhergehenden Ansprüche, wobei das Phosphat in einer Menge zwischen 45 Gew.-% und 65 Gew.-% in Bezug auf das Gesamtgewicht der wässrigen Lösung vorliegt.

8. Dämpfer nach einem der vorhergehenden Ansprüche, wobei die wässrige Lösung zusätzlich ein Korrosionsschutzmittel umfasst.

9. Dämpfer nach Anspruch 8, wobei das Korrosionsschutzmittel aus der Gruppe umfassend Azole, organische Säuren, Fettsäuren, n-Oleoylsarcosin und Kombinationen derselben ausgewählt wird.

10. Dämpfer nach Anspruch 9, wobei die Azole aus der Gruppe von Tolyltriazol und Benzotriazol ausgewählt werden und die organischen Säuren aus der Gruppe von Isononansäure, Hexansäure, Sebacinsäure und Kombinationen derselben ausgewählt werden.

11. Dämpfer nach einem der Ansprüche 8 bis 10, wobei das Korrosionsschutzmittel in einer Menge zwischen 0,1 Gew.-% und 2,5 Gew.-% in Bezug auf das Gesamtgewicht der wässrigen Lösung vorliegt.

12. Windturbine oder Gebäude umfassend einen Dämpfer nach einem der vorhergehenden Ansprüche.

13. Windturbine nach Anspruch 12, wobei sich der Dämpfer im Turm oder in der Gondel der Windturbine befindet.

14. Windkraftwerk umfassend mindestens eine der Windturbinen nach den Ansprüchen 12 oder 13.

## Revendications

1. Amortisseur pour équilibrer les mouvements d'une éolienne, dans lequel l'équilibrage des mouvements est réalisé par une solution aqueuse contenue dans un récipient de l'amortisseur,
**caractérisé en ce que** la solution aqueuse comprend un phosphate.

2. Amortisseur selon la revendication 1, dans lequel le phosphate est un phosphate inorganique.

3. Amortisseur selon la revendication 2, dans lequel le phosphate inorganique est un sel de sodium ou de potassium.

4. Amortisseur selon la revendication 2 ou 3, dans lequel le phosphate inorganique a un poids moléculaire supérieur à 150 g/mol, préférablement supérieur à 300 g/mol.

5. Amortisseur selon l'une quelconque des revendications 2 à 4, dans lequel les phosphates inorganiques sont sélectionnés du groupe constitué d'hexamétaphosphate de sodium, hydrogénoorthophosphate de dipotassium, orthophosphate de tripotassium, pyrophosphate de tétrapotassium, triphosphate de pentapotassium et combinaisons de ceux-ci.

6. Amortisseur selon la revendication 5, dans lequel le phosphate inorganique est le pyrophosphate de tétrapotassium.

7. Amortisseur selon l'une quelconque des revendications précédentes, dans lequel le phosphate est dans une quantité comprise entre 45 % et 65 % en poids par rapport au poids total de la solution aqueuse

8. Amortisseur selon l'une quelconque des revendications précédentes, dans lequel la solution aqueuse comprend en outre un agent anticorrosion.

9. Amortisseur selon la revendication 8, dans lequel l'agent anticorrosion est sélectionné du groupe comprenant des azoles, des acides organiques, des acides gras, la n-oleoylsarcosine et combinaisons de ceux-ci.

10. Amortisseur selon la revendication 9, dans lequel les azoles sont sélectionnés du groupe du tolyltriazole et du benzotriazole et les acides organiques sont sélectionnés du groupe de l'acide isononanoïque, l'acide hexanoïque, l'acide sébacique et combinaisons de ceux-ci.

11. Amortisseur selon l'une quelconque des revendications 8 à 10, dans lequel l'agent anticorrosion est dans une quantité comprise entre 0,1 % et 2,5 % en poids par rapport au poids total de la solution aqueuse

12. Éolienne ou bâtiment comprenant un amortisseur selon l'une quelconque des revendications précédentes.

13. Éolienne selon la revendication 12, dans laquelle l'amortisseur est situé dans la tour ou la nacelle de l'éolienne.

14. Centrale éolienne comprenant au moins une des éoliennes selon les revendications 12 ou 13.
